# EUROPEAN PATENT SPECIFICATION

(11) **EP 0 752 934 B1**
(45) Date of publication and mention of the grant of the patent: **19.07.2000**
(21) Application number: 95911444.8
(22) Date of filing: 20.03.1995
(51) Int. Cl.: B60G 11/12, B60G 17/02, B60G 21/055

(54) **VEHICLE SUSPENSION SYSTEM**
FAHRZEUGAUFHÄNGUNGSSYSTEM
SYSTEME DE SUSPENSION POUR VEHICULE

(30) Priority: 31.03.1994 GB 9406453
(43) Date of publication of application: 15.01.1997
(73) Proprietor: DETROIT STEEL PRODUCTS CO.INC., Morristown, IN 46161 (US)
(72) Inventor: REAST, John, Bolland, Bedford MK40 2NR (GB)
(74) Representative: Britter, Keith Palmer
(86) International application number: GB9500613
(87) International publication number: WO9526887

(56) References cited:
- EP-A- 0 137 096
- EP-A- 0 242 548
- WO-A-90/11201
- DE-A- 3 329 686
- DE-C- 583 361
- FR-A- 2 570 031
- GB-A- 410 282
- GB-A- 937 027
- US-A- 1 792 842
- US-A- 3 491 994

## Description

This invention concerns a suspension system for a vehicle, in which a leaf spring is provided to suspend the main body or chassis of the vehicle from a wheel-bearing axle of the vehicle.

Leaf springs are commonly used in vehicle suspension systems and act to deflect under load changes so as to isolate the main body from vibrations and irregularities occasioned in the course of the vehicle's travel over a surface. The leaf spring, in an unladen, or partly laden states, assumes a curved shape, the curvature of which increases or decreases under load changes, with concurrent change in the length of the spring end points.

It is normal practice to provide positive location at one end, usually the front end, of the spring, for example by means of a spring eye and a bush. This arrangement affords a substantially longitudinally fixed disposition for the vehicle's axle in relation to the main body. The other end, usually the rear end, of the spring is mounted in such a way as to accommodate the change in length of the spring and the shape of the spring at various load conditions is used dynamically to influence the steering and handling of the vehicle.

As an alternative to the use of rubber or polymer mountings, commonly known methods of mounting the relatively unfixed, for example, rear end of the spring, so as to accommodate length changes are a) by the provision of a shackle, or b) by the provision of a cam slider bracket.

In a known suspension system to be described hereinbelow the vehicle main body is suspended from a vehicle axle through a leaf spring having, at its front end, in the intended direction of normal travel of the vehicle, a spring eye and bush which affords a substantially longitudinally fixed disposition of the axle relative to the body. At its rear end, a pivotal shackle for accommodating changes of length of the spring as its curvature changes under varying load conditions, is used. In this known arrangement, forces produced by the angle of the shackle can affect the spring deflection rate in a non-uniform manner at various loads.

In another known suspension system also to be described hereinbelow the arrangement is similar to that described above but the shackle is replaced by a cam slider bracket in which an upper element of non-uniform curvature bears upon an upper surface of the spring leaf in frictional contact therewith. As the spring leaf angle changes, in the locality of the cam slider bracket, the upper surface of the spring leaf bears upon differing zones of the curved element of the bracket, which alters the effective length of the spring leaf. This also changes the spring leaf deflection rate in a non-uniform manner at various loads and the friction between the curved element and the spring leaf has an adverse effect on the quality of the ride experienced on the main body of the vehicle. Further, measures to reduce or eliminate wear of the curved element can made at additional expense in bracket design and manufacture. Even further, the effective length change of the spring leaf can also change the stress distribution along the spring leaf, thus deleteriously affecting its fatigue life. The shape of the curved element, and the ineffective length of the spring leaf beyond the curved element, use up considerable longitudinal installation space which reduces the effective length of the spring leaf available when the longitudinal installation space is limited, which is normally the situation. A modification, of this known system includes a cam slider bracket also but at the front end of the spring leaf and a separate radius leaf affording positive longitudinal location for the axle.

One known prior art suspension system, as described in GB-A-0,973,027 (NILSSON), comprises a leaf spring having an end thereof connected rigidly to an outer rigid sleeve of a torsion spring which provides a pivotal axis for the sleeve which is offset below the neutral axis in bending of the leaf spring and which extends generally normally to the regular working plane of the leaf spring. The outer rigid sleeve has at least a portion which extends radially of the leaf spring.

In operation, deflection of the leaf spring causes the torsion spring to be strained. In turn, this spring exerts a bending force upon the leaf spring, and this has the same effect as altering the effective length of the leaf spring which is, thus, progressively acting. It is, then, torsion build-up in the torsion spring as its outer sleeve rotates relative to deformation internal parts, which produces variations in the effective stiffness of the leaf spring.

Another known prior art suspension system, as described in FR-A1-2570031 (CRR), comprises a leaf spring made from composite materials such as fibreglass, with two radii of curvature along its length. The active, or deflection, section has a larger radius of curvature, whilst the section used for attachment at an end of the leaf, has a small radius of curvature. The mounting through which the leaf is attached to an offset pivotal axis, is clamped to the leaf spring so as to allow no relative movement therebetween, the clamping portion thereof comprising a radius of curvature such that the small radius of curvature of the leaf spring may be fully accommodated therein.

In operation, deflection of the leaf spring causes the mounting to rotate about the offset pivotal axis. This rotation allows the mounting to accommodate any "take-up" in the system during deflection of the leaf.

In a further known suspension system, as described in EP-A1-0242548 (AUDI) corresponding to the preamble of claim 1, a fibre reinforced plastic leaf spring has a wedge shaped end which is clamped into a force application component. This force application component is pivotally mounted on a vehicle through a moulded bearing eye, which is offset to the neutral axis in bending of the leaf spring.

This arrangement allows for the forces applied to the leaf to be transmitted thereto without any significant bending strain or shearing stress being applied to the composite layer and hence to the fibres which are aligned with the neutral axis of bending of the leaf spring, that is longitudinally thereto.

In our International Patent Application, Publication Number WO-90/11201, there are disclosed embodiments of a vehicle suspension system in which a rigid member is connected rigidly to a leaf spring affording a first suspension means and to an axis to which the member is pivotally connected. The axis is offset from the neutral axis in bending of the leaf spring and which extends generally normally to the regular working place of the leaf spring. The rigid member extends radially of the leaf spring.

Another spring affords a second suspension means which may act mechanically in series or, alternatively, in parallel with the first suspension means. Also, anti-roil means, preferably in the form of an anti-roil bar or tube, is provided to act in conjunction with the first and second suspension means in order to give the suspension desired anti-roil characteristics.

Thus, these prior art arrangements provide a suspension system for a vehicle, comprising a leaf spring ranged to suspend a main body or chassis of a vehicle from a wheel-bearing axle thereof, a rigid member connected rigidly to the leaf spring at or adjacent an end thereof and an axis to which the matter is pivotally connected and which is positioned substantially offset from the neutral axis in bending of the leaf spring and which extends generally normally to the regular working plane of the leaf spring, wherein the rigid member is a radial arm having one end connected rigidly to the leaf spring at or adjacent an end thereof and its other end connected pivotally to the offset axis.

The invention aims to provide an improved suspension system with mounting for the spring which better accommodates changes in spring length. The inventive system combines the advantage of a low fiction of the shackle arrangement but with the simplicity of a smaller number of components and with the ability to vary the deflection rate of the spring under different load conditions, whilst also increasing the load-carrying capacity of the spring at higher loads, all this being achieved with a saving of cost and weight.

Accordingly, the invention is characterised in that the offset pivotal axis is arranged to take-up any notional displacement thereof arising, in operation, from deflections of the leaf spring outside the defined spring loading and deflection ranges.

Throughout this specification, the team "regular working plane of the leaf spring" is used to represent that plane in which the leaf spring is deflected under normal working conditions, namely, one which is generally vertical and extends in the fore-and-aft direction of the vehicle.

The pivotal axis is preferably in the form of a bush provided either at the rear end or the front end of the leaf spring, or there may be such a bush or other pivotal axis at both ends, thereof. The centre of the or each bush affords an axis substantially offset from the neutral bending axis of the leaf opening, whose rest position in relation to the adjacent end of the spring may be selected such that no, or substantially no, actual or notional displacement of the offset axis from its rest position will occur for defections of the spring over defined spring loading and deflection ranges.

The pivotal axis may be in the form of a bush, although other suitable forms of pivotal axis means may be employed.

The arrangement of the or each bush or other pivotal axis in relation to the adjacent end of the spring is such that any substantially longitudinally-directed displacement of the bush or other pivotal axis means, arising from a change in curvature and effective length of the spring, is mostly compensated by an opposite longitudinally-directed displacement of the bush or other pivotal axis means arising from a change of the local spring angle. Thus, for spring defections within defined spring loading and deflection ranges the bush or other pivotal axis means will experience no, or substantially no, actual displacement; whereas, for defections outside these defined ranges, any notional displacement may be taken up by the bush or other pivotal axis means.

The invention will be better appreciated from the following description of embodiments thereof given by way of example and with reference to the accompanying drawings in which:
Figures 1A, 1B and 1C are illustrative prior art suspension systems not forming part of this invention;
Figure 2 diagrammatically illustrates the principle of the present invention;
Figures 3A and 3B illustrate the performance of the invention under two different load conditions; and
Figures 4A, 4B and 5 show modified arrangements of the invention.

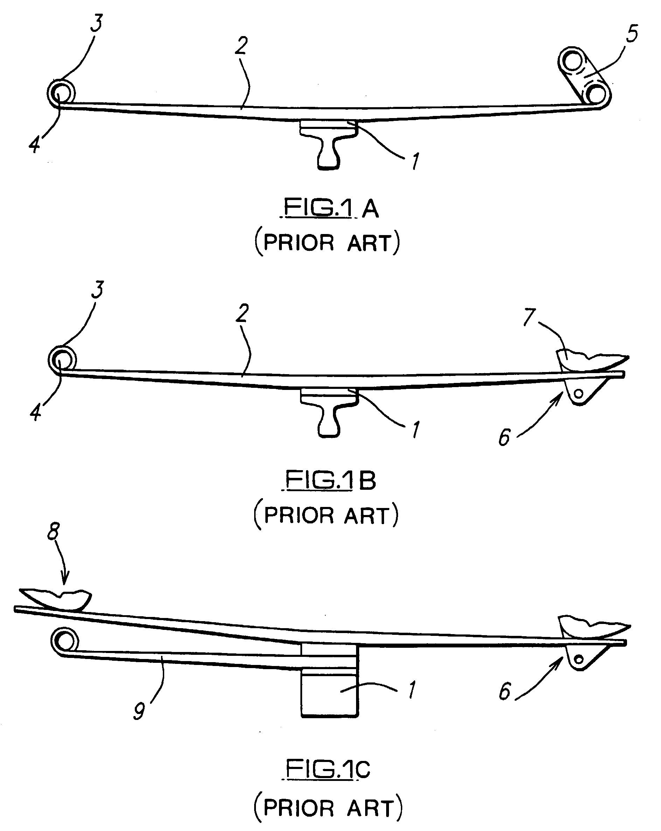

In Figure 1A of the accompanying drawings, there is shown a vehicle axle 1 from which the vehicles main body (not shown) is suspended through a leaf spring 2 having, at its front end, in the intended direction of normal travel of the vehicle, a spring eye 3 and bush 4 which affords a substantially longitudinally fixed disposition of the axle relative to the body. At its rear end, a pivotal shackle 5 for accommodating changes of length of the spring 2 as its curvature changes under varying load conditions, is used. In this known arrangement, forces produced by the angle of the shackle 5 can affect the spring deflection rate in a non-uniform manner at various loads.

A second prior art suspension system is shown in Figure 1B, wherein the arrangement is similar to that described above in relation to Figure 1A but the shackle 5 is replaced by a cam slider bracket 6 in which an upper element 7 of non-uniform curvature bears upon an upper surface of the spring leaf 2 in frictional contact therewith. As the spring leaf angle changes, in the locality of the cam slider bracket 6, the upper surface of the spring leaf 2 bears upon differing zones of the curved element 7 of the bracket, which alters the effective length of the spring leaf. This also changes the spring leaf deflection rate in a non-uniform manner at various loads and the friction between the curved element 7 and the spring leaf 2 has an adverse effect on the quality of the ride experienced on the main body of the vehicle. Further, measures to reduce or eliminate wear of the curved element can made at additional expense in bracket design and manufacture. Even further, the effective length change of the spring leaf 2 can also change the stress distribution along the spring leaf 2, thus deleteriously affecting its fatigue life. The shape of the curved element 7, and the ineffective length of the spring leaf 2 beyond the curved element 7, use up considerable longitudinal installation space which reduces the effective length of the spring leaf available when the longitudinal installation space is limited, which is normally the situation. A modification, of this known system, as shown in Figure 1C, includes a cam slider bracket 8 also but at the front end of the spring leaf 2 and a separate radius 9 leaf affording positive longitudinal location for the axle 1.

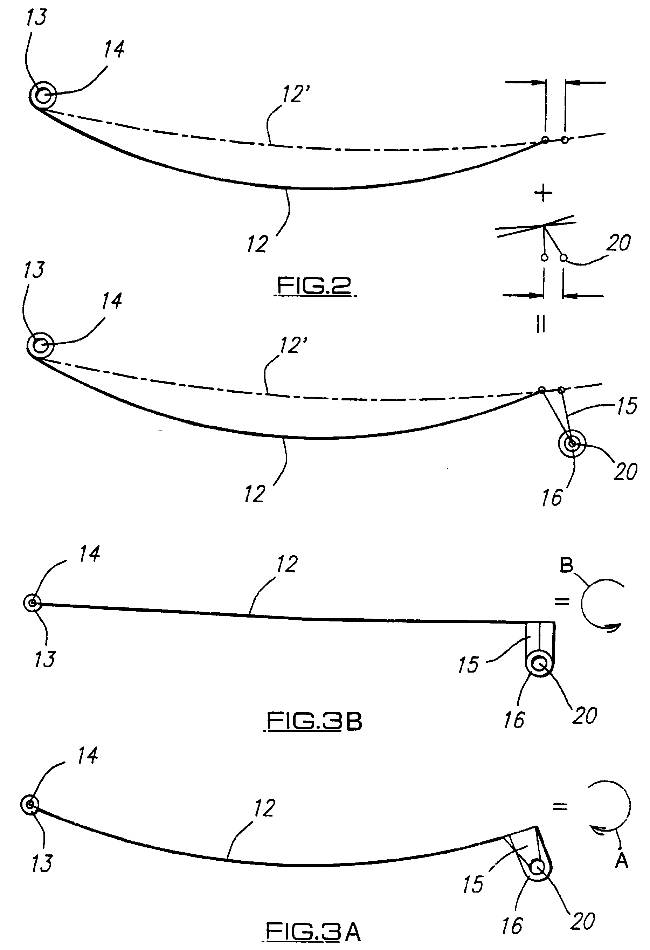

A preferred embodiment of inventive suspension system comprises a leaf spring 12, as shown in Figures 2 and 3A and 3B, which suspends a vehicle chassis or body (not shown) from a wheel-bearing axle (also not shown) of the vehicle. The front end of the spring 12, as seen in the intended normal direction of travel of the vehicle, is mounted to the chassis or body through a spring eye 13 and bush 14, as is well known, and by such means the position of the axle, in the longitudinal sense of the vehicle, is substantially fixed.

The rear end of the spring 12 has rigidly connected to it one end of a rigid radial arm 15 which has its other end connected to a bush 16 which thus lies substantially offset, in this instance below, from the neutral axis in bending of the leaf spring 12 and whose pivotal axis extends generally normally to the regular working plane of the spring. The rearward end of the spring 12 is otherwise unrestrained.

The principle of operation of the invention may be appreciated from the upper portion of Figure 2, as will now become more evident. As can be seen, in an unladen or only lightly laden condition, the spring 12 has a relatively strong curvature, shown in solid lines in the Figure, whereas under greater loading it assumes a relatively flatter profile 12', shown in chain dotted lines. As the loading increases and the curvature decreases, the relatively unrestrained rearward end of the spring 12, 12' moves rearwardly, i.e. the effective length of the spring changes by an amount indicated by the "+" sign in the Figure. The spring angle, at this rearward location, also changes. The rearward motion due to the increase in effective length is substantially compensated by a forward motion of an offset pivotal axis 20 due to the lessening of the spring angle. By appropriate choice of the position of the offset pivotal axis 20, it is possible to provide that, over a limited spring loading and deflection range, the axis 20 will remain effectively stationary as a result of the combined, substantially oppositely-directed motions. With larger deflections of the spring 12 there will be a tendency for the offset pivotal axis 20 to displace slightly.

In carrying this principle into practical effect, a rigid radial arm 15 connects the rearward end of the spring 12 to a bush 16 whose centre point coincides with the required offset axis 20. Means associated with the axis 20 mounts the bush 16 to the vehicle body or chassis. The design and/or resistance of the bush 16 may be such as to take up the error, or notional displacement, in the offset pivotal axis 20 due to larger spring deflections. For example, the bush 20 could have sufficient flexibility of the working range of the spring 12, or could have voids formed therein in the horizontal direction.

When the bush 16 resists the aforementioned displacement of the offset pivotal axis 20, the spring 12 will be forced into a modified shape to accommodate the mismatch between the desired and actual positions of the axis 20. The resulting torque applied to the spring 12 has a favourable effect on spring deflection and stress, as will be described in more detail with reference to Figures 3A and 3B.

Figure 3A illustrates the situation extant when the suspension is lightly loaded, say when the vehicle is unladen. In this situation deflection of the spring 12 from the heavily curved "rest" position shown has the effect of producing greater notional displacement of the offset pivotal axis 20 in a rearward sense, arising from an increase in the effective length of the spring 12, than the relatively lesser notional displacement in a forward sense, arising from a lessening of the local spring angle. The resultant desired displacement of the offset pivotal axis 20 is resisted by the bush 16 giving rise to a mismatch offset force, towards the centre of the spring 12. The torque produced, as shown by arrow A, tends to deflect the spring by a greater amount than a free spring under the given load increase, the effect of this being a softening of the spring, which is usually desirable at light load.

Figure 3B illustrates the situation extant when the suspension is heavily loaded, say when the vehicle is at or above its design load. By contrast with the Figure 3A situation, deflection of the spring 12, whose profile is approaching flat in the rest position, has the effect of producing a lesser notional displacement of the offset pivotal axis 20 in a rearward sense, arising from an increase in the effective length of the spring 12, than a relatively greater notional displacement in a forward sense, arising from a lessening of local spring angle. In this case, the torque B produced, as shown by arrow B, resists deflection under an increase in load, the effect of which is to stiffen the spring. Further, when this torque is applied, the stresses within the spring 12 are reduced compared with free spring stresses under the given load. In normal use, this stiffening of the spring 12 and the reduction in stresses are desirable features in a vehicle suspension system when operating at higher loadings.

The invention broadly conceived is not limited to the details of the embodiment described above. For example, it extends to the provision of a bush not only at the rear end of the spring 12, as already described, but in addition or alternative at the front end of the spring 12. Such a front end bush would also be positioned substantially offset from the neutral axis in bending of the spring by a rigid radial arm connected rigidly at one end of the spring, with the pivotal axis 20 of the bush extending generally normally to the regular working plane of the spring.

Furthermore, the present invention may advantageously be incorporated in a suspension system utilising an anti-roll device, for example, an anti-roll torsion bar or tube.

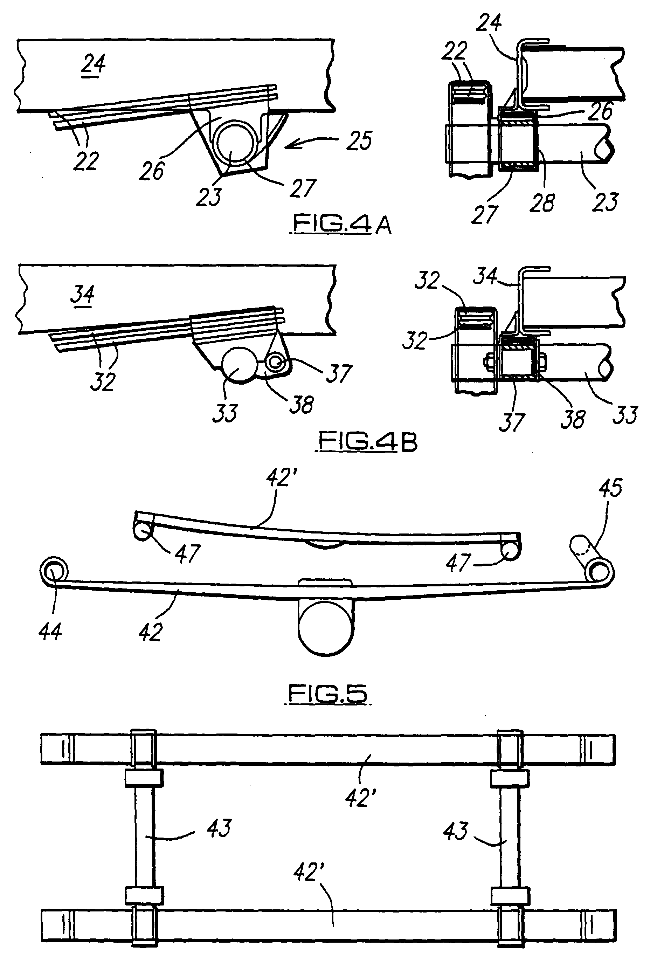

In one such embodiment, shown in Figure 4A, a vehicle suspension system comprises a pair of leaf springs 22 mounted by means of a suitable bracket 25 to an anti-roll bar 23 which extends transversely of the vehicle chassis 24. The bracket 25 affords a rigid arm 26 extending radially from the anti-roll bar 25, which is thus offset below the neutral axis of the spring, to an end part of the springs 22. Encircling the anti-roll bar 25 at a position, here shown transversely inwardly of the vehicle chassis, is a bush 27 the housing 28 of which is secured to the anti-roll bar 25 or the vehicle chassis 24 to allow rotation of the bar 25 relative to the chassis. This bush 27, which is also offset from the neutral axis of the leaf springs 22, thus functions in a manner similar to that described above in the embodiment illustrated with reference to Figure 2.

This embodiment and any modification thereof is suited for application to the suspension system disclosed in our published International Patent Application No. WO90/11201.

In another embodiment, as shown in Figure 4B, the suspension system is similar to that shown in Figure 4A but in this instance the housing 38 of the bush 37 does not encircle the anti-roll bar 33. Rather, it is secured to the rear of the anti-roll bar 33, to provide a so-called "resistance arm" which acts between the anti-roll bar 33 and the vehicle chassis or frame 34, during straight axle static bounce of the suspension, to at least partially counteract any consequential rotational movement of the anti-roll bar, thereby applying a couple or moment to, and, as a result altering the deflection and rate of, the suspension.

This embodiment and any modifications thereof is suitable for application to the vehicle suspension disclosed in our published International Patent Application No. WO92/22438.

In both these cases, Figures 4A and 4B, the disposition of the bush 27, 37 transversely offset from the longitudinal axis of the spring 22, 23 allows for more efficient and economical frame brackets. This also allows a clearer frame face adjacent the spring-to-frame cross-member mounting, thus allowing for more satisfactory mounting of other parts such as the body tipping hinge bracket in a dump truck. Also, the brackets may be combined into a single bracket assembly. Another advantage of the simplified spring-to-frame mounting is the creation of the effect of a longer spring in circumstances where constraints exist that prevent the employment of longer springs in conventional systems. This effect, combined with the features described in the aforementioned published International Application No. WO92/22438 concerned with spring rate change, produces an effective variable rate suspension system. This particular system would use a low cost, high durability, mono rate spring and this would obviate the complications involved in the use of a dual or variable rate spring used in the prior art.

Further, in the embodiments described with reference to Figures 4A and 4B, when the spring 22, 32 deflects beyond its flat profile and takes a negatively curved profile, which normally happens at higher loadings and towards bump conditions, the mismatch at the bush 27, 37 becomes high. This is because notional displacements at the offset point due to the increase in effective length and local spring angle change are now additive instead of opposed. Therefore, loading on the bush 27, 37 and spring stiffening are high.

The high torque effect on the spring creates a high stiffening therefor and an associated reduction in stress in the spring 22, 32. These are normally desirable features of a suspension system, allowing the use of a softer, cheaper and higher stressed spring under normal working loadings.

Yet further, the present invention may advantageously be incorporated in a suspension system utilising an auxiliary spring as described also in our published International Patent Application No. WO 90/11201.

In this embodiment of Figure 5, as shown in the upper part of the Figure, the vehicle axle mounts a main leaf spring 142 having the usual spring eye and bush, and shackle, mountings 44, 45, and an auxiliary leaf spring 42' is mounted by both front and rear bushes 47 which, in accordance with the present invention, are offset below the neutral axis of the spring 42'. Preferably, the bushes 47' in this embodiment are constructed with horizontal voids. A transverse anti-roll bar could also be incorporated, if desired, in a manner similar to that illustrated in Figure 4A or 4B above. For example, and as shown in the lower part of the Figures, the anti-roll bars 43 extend transversely between front and rear ends of the auxiliary leaf springs 42' at respective longitudinal sides of the vehicle.

Thus, it will be seen that the invention provides a convenient, simple, effective and efficient suspension system which avoids the disadvantages of the prior art shackle and cam slider bracket arrangements, whilst additionally giving increased performance arising from automatic adaptation of the system to, respectively, low and high suspension loadings, through the appropriate softening or stiffening effects on the spring.

Although the preferred embodiments of inventive suspension system described above employ a bush as the pivot means, other suitable pivot means may be used.

## Claims

1. A suspension system for a vehicle, comprising a leaf spring (12, 12') arranged to suspend a main body or chassis of a vehicle from a wheel-bearing axle thereof, a rigid member (15) connected rigidly to the leaf spring (12, 12') at or adjacent an end thereof and an axis (20) to which the member (15) is pivotally connected and which is positioned substantially offset from the neutral axis in bending of the leaf spring (12, 12') and which extends generally normally to the regular working plane of the leaf spring, wherein the rigid member (15) is a radial arm having one end connected rigidly to the leaf spring (12, 12') at or adjacent an end thereof and its other end connected pivotally to the offset axis (20); characterised in that the position of the offset pivotal axis (20) with respect to the leaf spring (12, 12') in the rest condition of the system is selected such that, in operation, deflections of the leaf spring (12, 12') over defined spring loading and deflection ranges produce no, or substantially no, actual or notional displacement of the offset pivotal axis (20) from its rest position and the offset pivotal axis (20) is disposed with respect to the leaf spring (12, 12') and connected thereto such that:
(a) in a relatively lightly loaded state of the suspension system, operational forces create a softening effect of the spring; and
(b) in a relatively heavily loaded state of the suspension system, operational forces create a stiffening effect of the spring;
which forces arise from deflections of the spring outside defined spring loading and deflection ranges,
and in that the offset pivotal axis (20) is ranged to take-up any notional displacement thereof arising, in operation, from deflections of the leaf spring (12, 12') outside the defined spring loading and deflection ranges.

2. A suspension system according to claim 1, wherein the offset pivotal axis (20) is of sufficient flexibility to permit it to accommodate said take-up.

3. A suspension system according to any preceding claim, wherein the offset pivotal axis (20) comprises a bush (16).

4. A suspension system according to claim 3, when dependent upon claim 1 or 2, wherein the bush (16) has internal voids for accommodating said take-up.

5. A suspension system according to any preceding claim, wherein the leaf spring (12) is mounted to a transverse anti-roll device (23) to which the vehicle body or chassis (24) is mounted, with the offset pivotal axis being in concentric relationship to the anti-roll device (23).

6. A suspension system according to claim 5, wherein the leaf spring (22) is mounted to the transverse anti-roll device (23) by means of a first bracket (25), with the mounting of the vehicle body or chassis (24) to the anti-roll device (23) being by means of a second bracket which has a portion (25) housing the offset pivotal axis in concentric relationship to the anti-roll device (23).

7. A suspension system according to claim 6, wherein the first and second brackets are combined into a single bracket assembly.

8. A suspension system according to any of claims 1 to 6, wherein the leaf spring (32) is mounted to a transverse anti-roll device (33) to which the vehicle body chassis (34) is mounted, with the offset pivotal axis being in non-concentric relationship to the anti-roll device (33).

9. A suspension system according to claim 8, wherein the leaf spring (32) is mounted to the transverse anti-roll device (33) by means of a first bracket, with the mounting of the vehicle body or chassis (34) to the anti-roll device (33) being by means of a second bracket which has a portion (38) housing the offset pivotal axis in non-concentric relationship to the anti-roll device (33).

10. A suspension system according to any of claims 5 to 9, wherein the anti-roll device (23, 33, 43) is a torsion bar or tube.

11. A suspension system according to any preceding claim, including a rigid member (15) and associated offset pivotal axis (20) located at or adjacent either end of the leaf spring (12, 12') or at or adjacent both ends thereof.

12. A suspension system according to any preceding claim, wherein the leaf spring (42') is auxiliary to a main leaf spring (42) which mounts a wheel-bearing axle of the vehicle.

13. A vehicle incorporating a suspension system according to any preceding claim.

## Patentansprüche

1. Aufhängungssystem für ein Fahrzeug, mit einer Blattfeder (12,12'), welche zur Aufhängung eines Hauptkörpers oder -chassis eines Fahrzeugs an einer radtragenden Achse desselben ausgebildet ist, einem starren Element (15), welches starr mit der Blattfeder (12,12') an oder nahe einem Ende derselben und mit einer Achse (20) verbunden ist, mit welcher das Element (15) schwenkbar verbunden ist, und welche im wesentlichen versetzt von der neutralen Achse bei Biegung der Blattfeder (12,12') angeordnet ist und welche sich im allgemeinen senkrecht zu der normalen Arbeitsebene der Blattfeder erstreckt, wobei das starre Element (15) ein radialer Arm ist, dessen eines Ende starr mit der Blattfeder (12,12') an oder nahe einem ihrer Enden verbunden ist und dessen anderes Ende schwenkbar mit der versetzten Achse (20) verbunden ist, dadurch gekennzeichnet, daß die Position der versetzen Schwenkachse (20) in bezug auf die Blattfeder (12,12') im Ruhezustand des Systems so gewählt ist, daß bei Betrieb Auslenkungen der Blattfeder (12,12') über die definierten Federbelastungs- und -auslenkungsbereiche hinaus keine, oder im wesentlichen keine tatsächliche oder theoretische Verlagerung der versetzten Schwenkachse (20) aus ihrer Ruheposition erzeugen und die versetzte Schwenkachse (20) in bezug auf die Blattfeder (12,12') so angeordnet ist und mit dieser so verbunden ist, daß:
(a) in einem relativ leicht belasteten Zustand des Aufhängungssystems Betriebskräfte ein Weicherwerden der Feder bewirken; und
(b) in einem relativ stark belasteten Zustand des Aufhängungssystems Betriebskräfte ein Härterwerden der Feder erzeugen,
welche Kräfte aus Auslenkungen der Feder außerhalb definierter Federbelastungs- und Auslenkungsbereiche entstehen,
und daß die versetzte Schwenkachse (20) so ausgebildet ist, daß sie jegliche theoretische Verschiebung, die aus Auslenkungen der Blattfeder (12,12') bei Betrieb außerhalb der definierten Federbelastungs- und -auslenkungsbereiche entsteht, aufnimmt.

2. Aufhängungssystem nach Anspruch 1, wobei die versetzte Schwenkachse (20) ausreichende Flexibilität hat, so daß sie dieses Aufnehmen erlaubt.

3. Aufhängungssystem nach einem der vorhergehenden Ansprüche, wobei die versetzte Schwenkachse (20) eine Buchse (16) aufweist.

4. Aufhängungssystem nach Anspruch 3, in Abhängigkeit von Anspruch 1 oder 2, wobei die Buchse (16) innere Leerräume zum Erlauben dieses Aufnehmens aufweist.

5. Aufhängungssystem nach einem der vorhergehenden Ansprüche, wobei die Blattfeder (12) an einer transversalen Anti-Roh-Vorrichtung (23) befestigt ist, an welcher der Fahrzeugkörper oder Chassis (24) befestigt ist, wobei die versetzte Schwenkachse konzentrisch zu der Anti-Roll-Einrichtung (23) ist.

6. Aufhängungssystem nach Anspruch 5, wobei die Blattfeder (22) an der transversalen Anti-Roh-Vorrichtung (23) mittels einer ersten Halterung (25) befestigt ist, wobei die Befestigung des Fahrzeugkörpers oder -chassis (24) an der Anti-Roh-Vorrichtung (23) mittels einer zweiten Halterung erfolgt, welche einen Abschnitt (25) aufweist, in welchem die versetzte Schwenkachse konzentrisch zu der Anti-Roll-Vorrichtung (23) untergebracht ist.

7. Aufhängungssystem nach Anspruch 6, wobei die erste und zweite Halterung zu einer einzigen Halterungs-Anordnung kombiniert sind.

8. Aufhängungssystem nach einem der Ansprüche 1 bis 6, wobei die Blattfeder (32) an einer transversalen Anti-Roll-Vorrichtung (33) befestigt ist, an welcher das Fahrzeugkörperchassis (34) montiert ist, wobei die versetzte Schwenkachse nicht-konzentrisch zu der Anti-Roll-Vorrichtung (33) ist.

9. Aufhängungssystem nach Anspruch 8, wobei die Blattfeder (32) an der transversalen Anti-Roll-Vorrichtung (33) mittels einer ersten Halterung befestigt ist, wobei die Befestigung des Fahrzeugkörpers oder -chassis (34) an der Anti-Roll-Vorrichtung (33) mittels einer zweiten Halterung erfolgt, welche einen Abschnitt (38) aufweist, welcher die versetzte Schwenkachse nicht-konzentrisch zu der Anti-Roll-Vorrichtung (33) aufnimmt.

10. Aufhängungssystem nach einem der Ansprüche 5 bis 9, wobei die Anti-Roll-Vorrichtung (23,33,43) eine Torsionsstange oder -rohr ist.

11. Aufhängungssystem nach einem der vorhergehenden Ansprüche, mit einem starren Element (15) und zugehöriger versetzter Schwenkachse (20), die an oder nahe eines Endes der Blattfeder (12,12') oder an oder nahe beiden Enden derselben angeordnet ist.

12. Aufhängungssystem nach einem der vorhergehenden Ansprüche, wobei die Blattfeder (42') zusätzlich zu einer Haupt-Blattfeder (42) vorgesehen ist, welche an einer radtragenden Achse des Fahrzeugs angebracht ist.

13. Fahrzeug mit einem Aufhängungssystem nach einem der vorhergehenden Ansprüche.

## Revendications

1. Système de suspension pour un véhicule, comprenant un ressort à lame (12, 12') conçu pour suspendre un corps principal ou châssis du véhicule à un essieu porteur de roues de celui-ci, un organe rigide (15) relié rigidement au ressort à lame (12, 12') au niveau ou à proximité d'une extrémité de ce dernier et un axe (20) auquel l'organe (15) est relié de manière pivotante, axe (20) qui est positionné de manière sensiblement décalée par rapport à l'axe neutre en flexion du ressort à lame (12, 12') et qui s'étend sensiblement perpendiculairement au plan de travail normal du ressort à lame, l'organe rigide (15) étant un bras radial dont l'une des extrémités est reliée de manière rigide au ressort à lame (12, 12') au niveau ou à proximité d'une extrémité de celui-ci et dont l'autre extrémité est reliée de manière pivotante à l'axe décalé (20), caractérisé en ce que la position de l'axe de pivotement décalé (20) par rapport au ressort à lame (12, 12'), lorsque le système est au repos, est choisie pour qu'en fonctionnement des déformations du ressort à lame (12, 12') sur des plages de charges et de déformations élastiques définies n'engendrent pas ou sensiblement pas de déplacement réel ou fictif de l'axe de pivotement décalé (20) par rapport à la position de repos de celui-ci et pour que l'axe de pivotement décalé (20) soit disposé par rapport au ressort à lame (12, 12') et relié à celui-ci de telle façon que :
(a) dans un état de charge relativement légère du système de suspension, des forces opérationnelles créent un effet d'assouplissement du ressort ; et
(b) dans un état de charge relativement importante du système de suspension, des forces opérationnelles créent un effet de raidissement du ressort ;
ces forces résultant de déformations du ressort en dehors des plages de charges et de déformations élastiques définies,
et en ce que l'axe de pivotement décalé (20) est conçu pour compenser tous ses déplacements fictifs résultant, en fonctionnement, de déformations du ressort à lame (12, 12') en dehors des plages de charges et de déformations élastiques définies.

2. Système de suspension selon la revendication 1, dans lequel l'axe de pivotement décalé (20) a une flexibilité suffisante pour lui permettre d'absorber ladite compensation.

3. Système de suspension selon l'une des revendications précédentes, dans lequel l'axe de pivotement décalé (20) comprend un manchon (16).

4. Système de suspension selon la revendication 3 lorsque celle-ci est dépendante de la revendication 1 ou 2, dans lequel le manchon (16) comporte des vides intérieurs pour absorber ladite compensation.

5. Système de suspension selon l'une quelconque des revendications précédentes, dans lequel le ressort à lame (12) est monté sur un dispositif antiroulis transversal (23) sur lequel le corps ou châssis (24) du véhicule est monté, l'axe de pivotement décalé étant dans une relation concentrique avec le dispositif antiroulis (23).

6. Système de suspension selon la revendication 5, dans lequel le ressort à lame (22) est monté sur un dispositif antiroulis transversal (23) au moyen d'une première patte (25), le montage du corps ou châssis (24) du véhicule sur le dispositif antiroulis (23) étant réalisé au moyen d'une seconde patte comportant une partie (25) logeant l'axe de pivotement décalé dans une relation concentrique avec le dispositif antiroulis (23).

7. Système de suspension selon la revendication 6, dans lequel les première et seconde pattes sont combinées pour former un seul ensemble formant patte.

8. Système de suspension selon l'une quelconque des revendications 1 à 6, dans lequel le ressort à lame (32) est monté sur un dispositif antiroulis transversal (33) sur lequel le corps ou châssis (34) du véhicule est monté, l'axe de pivotement décalé étant dans une relation non concentrique avec le dispositif antiroulis (33).

9. Système de suspension selon la revendication 8, dans lequel le ressort à lame (32) est monté sur le dispositif antiroulis transversal (33) au moyen d'une première patte, le montage du corps ou châssis (34) du véhicule sur le dispositif antiroulis (33) étant réalisé au moyen d'une seconde patte comportant une partie (38) logeant l'axe de pivotement décalé dans une relation non concentrique avec le dispositif antiroulis (33).

10. Système de suspension selon l'une quelconque des revendications 5 à 9, dans lequel le dispositif antiroulis (23, 33, 43) est une barre ou un tube de torsion.

11. Système de suspension selon l'une quelconque des revendications précédentes, comprenant un organe rigide (15) et un axe de pivotement décalé (20) associé situés au niveau ou à proximité de l'une ou l'autre des extrémités du ressort à lame (12, 12') ou au niveau ou à proximité des deux extrémités de celui-ci.

12. Système de suspension selon l'une quelconque des revendications précédentes, dans lequel le ressort à lame (42') est un élément auxiliaire d'un ressort à lame principal (42) de montage d'un essieu porteur de roues du véhicule.

13. Véhicule comportant un système de suspension selon l'une quelconque des revendications précédentes.
